# EUROPÄISCHE PATENTSCHRIFT

(11) **EP 1 559 306 B1**
(45) Veröffentlichungstag und Bekanntmachung des Hinweises auf die Patenterteilung: **08.08.2007**
(21) Anmeldenummer: 05100333.3
(22) Anmeldetag: 20.01.2005
(51) Int. Cl.: A01D 75/28

(54) **Verteiler zur Verbesserung der Materialverteilung auf einem Sieb eines Reinigungssystems**
Distributor for improving the product distribution over a filter of a cleaning system
Distributeur pour améliorer la distribution de produit sur un filtre d'un système de nettoyage

(30) Priorität: 27.01.2004 US 765228
(43) Veröffentlichungstag der Anmeldung: 03.08.2005
(73) Patentinhaber: DEERE & COMPANY, Moline, Illinois 61265-8098 (US)
(72) Erfinder: Nelson, Jeffrey Arthur, Geneseo, IL Illinois 61254 (US); Abott, Jason Thomas, Orion, IL Illinois 61273 (US); Clifton, Kenneth Ralph, Coal Valley, IL Illinois 61240 (US)
(74) Vertreter: Holst, Sönke

(56) Entgegenhaltungen:
- DE-A1- 2 011 413
- DE-A1- 2 851 777
- US-A- 2 732 941

## Beschreibung

Die Erfindung betrifft einen Verteiler zur Verbesserung der Materialverteilung auf einem Sieb eines Reinigungssystems, der eine bewegliche Platte umfasst, welche eine innere Kante mit einem Befestigungszusammenbau und eine äußere Kante aufweist und geeignet ist, bei einer Bewegung des Siebs eine Klappbewegung zu vollführen.

Mähdrescher sind große landwirtschaftliche Maschinen, die landwirtschaftliches Erntegut ernten, dreschen, trennen und reinigen. Ein Erntevorsatz erntet das landwirtschaftliche Gut vom Feld und führt es einem Schrägförderer zu, der es einem Dreschzusammenbau übergibt. Der Dreschzusammenbau drischt das geerntete Gut und trennt das Korn vom verbleibenden Erntegut. Das gedroschene Gut wird einem Trennzusammenbau zugeführt, der die ausgedroschene Gutmatte auseinanderzieht, um gefangenes Korn freizusetzen. Die verbleibenden großen Komponenten des Ernteguts, die nicht Korn sind, werden aus dem Mähdrescher ausgestoßen. Die Größe dieser Komponenten kann durch einen Strohhäcksler vermindert werden.

Korn und Kaff fallen aus den Dresch- und Trennzusammenbauten und werden einem Reinigungszusammenbau zugeführt. Der Reinigungszusammenbau entfernt das Kaff vom Korn und bläst es zur Rückseite des Mähdreschers hinaus. Das gereinigte Korn wird am Boden des Reinigungszusammenbaus gesammelt und durch einen Elevator einem Korntank zugeführt.

Der Reinigungszusammenbau umfasst ein Reinigungsgebläse und einen Siebkasten. Der Siebkasten umfasst einen beweglichen Rahmen, der eine Reihe an Sieben enthält. Das oberste Sieb wird als Kaffsieb oder Obersieb bezeichnet. Der Hauptunterschied zwischen dem Obersieb und dem nachfolgenden Sieb (Untersieb), das unterhalb des Obersiebs angeordnet ist, besteht in der Größe der Sieböffnungen. Die Sieböffnungen des Obersiebs sind größer als die des nachfolgenden Siebs. Das zu reinigende Korn wird zuerst auf dem Obersieb abgelegt. Die Körner fallen durch das Obersieb auf das Untersieb und vom Untersieb auf den Boden des Reinigungszusammenbaus. Ein Luftstrom vom Reinigungsgebläse wird durch das Obersieb und das Untersieb nach oben gerichtet, um das leichtere Kaff zur Rückseite des Mähdreschers hinauszublasen. Der Rahmen bewegt sich in einer hin- und herbewegenden, schüttelnden oder wasserfallartigen Weise, um das zu reinigende Korn entlang des Obersiebs und des Untersiebs in Längsrichtung nach hinten zu fördern. Es ist anzumerken, dass Reinigungszusammenbauten mehr als ein Untersieb aufweisen können.

Die Siebkästen arbeiten am effizientesten, wenn sich der Mähdrescher auf ebenem Boden befindet. Wenn der Mähdrescher an Seitenhängen betrieben wird, sammelt sich das zu reinigende Korn an der bergab liegenden Seite des Siebkastens an und die bergauf liegende Seite wird nicht beaufschlagt. Bei extremem Betrieb wird der Mähdrescher mit Hangausgleichsmechanismen ausgestattet, die den Mähdrescher beim Seitenhangbetrieb horizontal ausrichten. Das ist bei der großen Mehrheit landwirtschaftlicher Betriebe keine ökonomische Lösung. Eine einfache Lösung war, sich längs erstreckende Teiler an den Sieben bereitzustellen, welche die Bergabbewegung des zu reinigenden Korns begrenzen. Diese Lösung war nicht sehr effektiv und eine Vielzahl anderer Mechanismen wurde vorgeschlagen, die einen Teil des zu reinigenden Korns entweder mechanisch oder pneumatisch zur bergauf liegenden Seite des Mähdreschers treiben.

Die DE 20 11 413 A beschreibt einen Verteiler eingangs genannter Art. Er setzt sich aus schwenkbar am Siebkasten angebrachten Leitblechen zusammen, die an ihren dem Siebgut zugewandten Oberflächen mit Förderstufen für das Siebgut versehen sind.

Das der Erfindung zu Grunde liegende Problem wird darin gesehen, das zu reinigende Korn auf einfache Weise gleichmäßig über den Siebkasten zu verteilen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Siebkasten ist mit einem beweglichen Rahmen ausgestattet, der Seitenwände aufweist. Der Rahmen trägt ein Obersieb und ein Untersieb zur Aufnahme zu reinigenden Korns. An der Oberseite wenigstens eines der Siebe sind Verteiler angeordnet, die sich in den Flussweg des Korns oberhalb des Siebs erstrecken. Die Bewegung des Siebkastens veranlasst die Verteiler, nach hinten und vorn umzuklappen. Diese Umklappwirkung der Verteiler verteilt das zu reinigende Korn in Querrichtung über das Sieb, so dass der Reinigungszusammenbau effizienter arbeitet. Die Verteiler sind in der Regel am Obersieb angebracht; falls es der Raum zulässt, können sie auch positioniert werden, um zu reinigendes Korn über ein Untersieb zu verteilen. Die Verteiler umfassen flexible und federnde Platten. Die flexiblen und federnden Platten haben eine innere Kante und eine äußere Kante. Die innere Kante ist durch geeignete Befestigungsschrauben, Nieten oder andere Mittel an einem Befestigungskanal befestigt, der an einer der Seitenwände des Rahmens des Siebs oder einem sich entlang des Siebs erstreckenden Teiler angeordnet ist. Die äußere Kante ist mit einem Gewicht versehen, um die Umklappbewegung der Platte zu verstärken.

Das Sieb ist vorzugsweise mit sich in Längsrichtung erstreckenden Teilern versehen, die eine Mehrzahl an längs verlaufenden Flusskanälen für das Korn definieren. Mehrere Verteiler werden an den Teilern und/oder Seitenwänden des Rahmens des Siebkastens befestigt.

Die Platte erstreckt sich in eine flussabwärts gerichtete Richtung von der Seitenwand oder vom Teiler nach außen und bildet im Ruhezustand einen spitzen Winkel mit der Seitenwand oder dem Teiler von vorzugsweise 30 bis 60°. Der Befestigungskanal definiert diesen Winkel.

In den Zeichnungen ist ein nachfolgend näher beschriebenes Ausführungsbeispiel der Erfindung dargestellt. Es zeigt:
- Fig. 1: eine halbschematische seitliche Ansicht eines landwirtschaftlichen Mähdreschers,
- Fig. 2: eine perspektivische Ansicht des Siebkastens, und

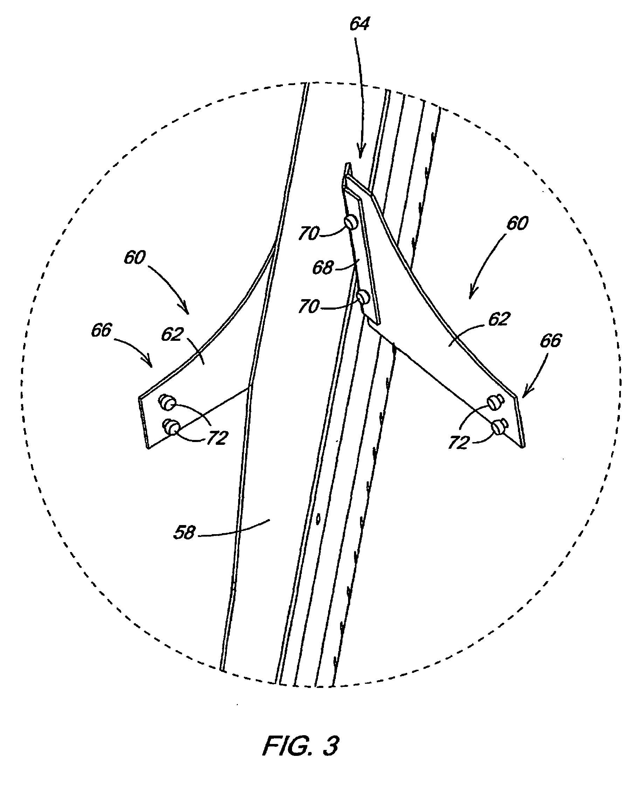

- Fig. 3: eine vergrößerte perspektivische Ansicht der in Figur 2 eingekreist eingezeichneten Verteiler.

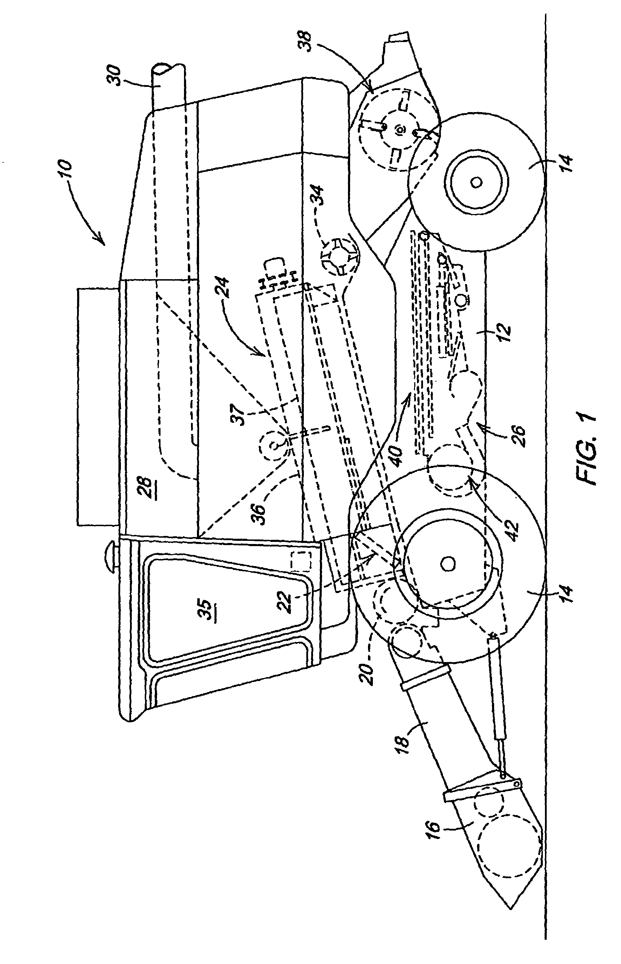

Die Figur 1 zeigt eine landwirtschaftliche Erntemaschine in der Form eines Mähdreschers 10, der einen tragenden Aufbau 12 mit im Eingriff mit dem Erdboden befindlichen Rädern 14 aufweist. Obwohl der Mähdrescher mit Rädern 14 dargestellt ist, könnte er auch zwei oder vier Raupenlaufwerke haben. Ein Erntevorsatz 16 wird verwendet um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben durch einen Einlassübergangsabschnitt 22 einer drehbaren Gutbearbeitungseinheit 24 zu.

Die Gutbearbeitungseinheit 24 drischt und trennt das Erntegut. Korn und Spreu fallen durch Roste an der Unterseite der Gutbearbeitungseinheit 24 in ein Reinigungssystem 26. Das Reinigungssystem 26 entfernt die Spreu und führt das saubere Korn einem Elevator für sauberes Korn (nicht gezeigt) zu. Der Elevator für sauberes Korn legt das saubere Korn in einem Korntank 28 ab. Das saubere Korn im Korntank 28 kann durch einen Entladeschneckenförderer auf einen Kornwagen, Anhänger oder Lastwagen entladen werden.

Gedroschenes und den Trennabschnitt verlassendes Stroh wird durch einen Auslass 32 aus der Erntegutbearbeitungseinheit 24 ausgestoßen und einer Fördertrommel 34 zugeführt. Die Fördertrommel 34 führt das von Korn verschiedene Material einem Strohhäcksler 38 zu. Der Betrieb des Mähdreschers 10 wird von einer Bedienerkabine 35 aus gesteuert.

Die axiale Gutbearbeitungseinheit 24 umfasst ein Rotorgehäuse 36 und einen darin angeordneten Rotor 37. Der vordere Teil des Rotors 37 und des Rotorgehäuses 36 definieren den Beschickungsabschnitt der Gutbearbeitungseinheit 24. In Längsrichtung stromab des Beschickungsabschnitts 38 sind der Dreschabschnitt, der Trennabschnitt und der Austragabschnitt. Der Rotor 37 ist im Beschickungsabschnitt mit einer konischen Rotortrommel mit wendelförmigen Beschickungselementen versehen, um in das Erntegut einzugreifen, das von der Leittrommel 20 und dem Einlassübergangsabschnitt 22 einläuft. Unmittelbar stromab des Beschickungsabschnitts befindet sich der Dreschabschnitt der Gutbearbeitungseinheit 24. Im Dreschabschnitt 39 ist der Rotor 37 mit einer zylindrischen Rotortrommel versehen, die eine Anzahl an Dreschelementen aufweist, um das vom Beschickungsabschnitt herangeförderte Erntegut zu dreschen. Stromab des Dreschabschnitts ist der Trennabschnitt, in dem das im gedroschenen Erntegut noch gefangene Korn freigesetzt wird und durch ein bodenseitiges Rost in das Reinigungssystem 26 fällt. Der Trennabschnitt geht in einen Austragabschnitt über, in dem von Korn verschiedenes Material von der axialen Gutbearbeitungseinheit zur Fördertrommel 34 ausgestoßen wird. Obwohl die Erfindung anhand eines Rotormähdreschers beschrieben wird, kann sie auch an anderen Mähdreschern wie konventionellen Strohschüttlermähdreschern und Hybridmähdreschern mit quer angeordneten Dreschtrommeln und rotierenden Trenneinrichtungen Verwendung finden.

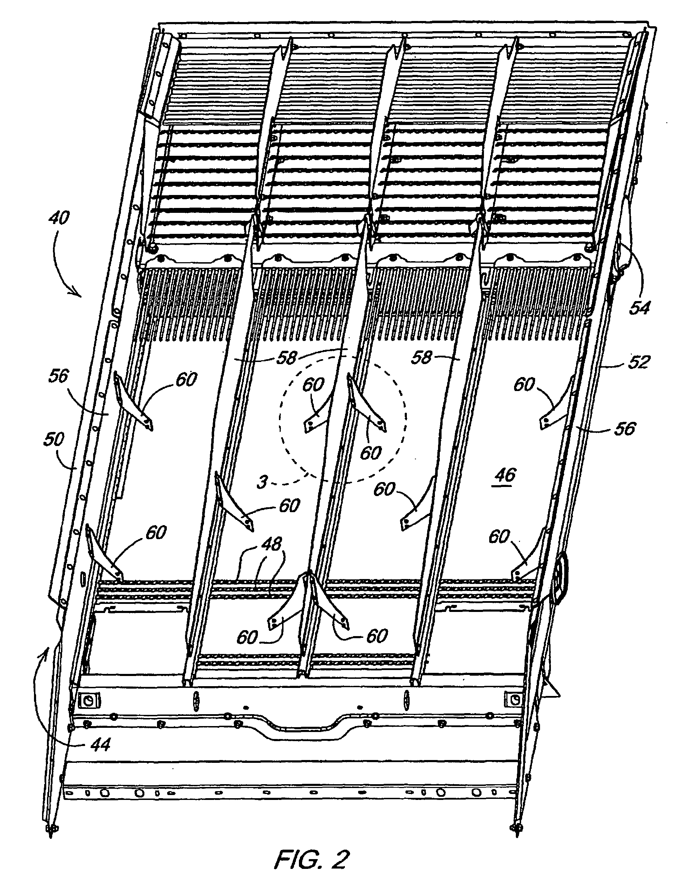

Das Reinigungssystem 26 umfasst einen Siebkasten 40 und ein Reinigungsgebläse 42. Der Siebkasten 40 umfasst einen Rahmen 44, der ein Obersieb 46 und ein Untersieb hält. Das Obersieb 46 ist wie das Untersieb mit einer Reihe sich quer erstreckender, überlappender Lamellen 48 ausgestattet, die über die Länge des Obersiebs 46 und des Untersiebs verteilt sind. Nur eine kleine Anzahl an Lamellen 48 sind in der Figur 2 dargestellt, wobei die verbleibenden Lamellen 48 zur besseren Darstellung der vorliegenden Erfindung fortgelassen wurden.

Der dargestellte Siebkasten 40 ist ein sich hin- und herbewegender Siebkasten, wobei das Obersieb 46 und das Untersieb gegeneinander Hin- und Herbewegungen vollführen. Der Rahmen 44 umfasst einen oberen Rahmen 50 und einen unteren Rahmen 52, die durch Hänger 54 untereinander verbunden sind. Das Obersieb 46 wird vom oberen Rahmen 50 abgestützt und das Untersieb wird vom unteren Rahmen 52 abgestützt. Obwohl die Erfindung an einem sich hin- und herbewegenden Siebkasten 40 beschrieben wird, kann sie auch an anderen Typen von Siebkästen Verwendung finden, einschließlich schüttelnder und wasserfallartiger Siebkästen. Außerdem kann die vorliegende Erfindung an Obersieben und/oder Untersieben genutzt werden.

Der obere Rahmen 50 des Siebkastens 40 ist mit zwei Seitenwänden 56 versehen, die innere Oberflächen haben, die dem Obersieb 46 zugewandt sind. Drei sich längs erstreckende Teiler 58 sind am Obersieb 46 befestigt. Verteiler 60 sind an den Seitenwänden 56 und an den Teilern 58 angebracht und erstrecken sich in den längsgerichteten Flussweg des zu reinigenden Korns, das sich über das Obersieb 56 bewegt. Jeder Verteiler 60 umfasst eine Platte 62, die sich in den Flussweg erstreckt. Die Bewegung des Siebkastens 40 treibt die Platten 62 an, nach hinten und vorn zu klappen. Diese Klappwirkung der Platten 62 verteilt das zu reinigende Korn in Querrichtung über das Obersieb 46, so dass das Reinigungssystem effizienter arbeitet.

In der dargestellten Ausführungsform umfassen die Verteiler 60 flexible und federnde Platten 62. Die flexiblen und federnden Platten 62 haben eine innere Kante 64 und eine äußere Kante 66. Die innere Kante 64 ist durch Befestigungsschrauben 70, Nieten oder andere geeignete Befestigungsmittel an einem Befestigungskanal 68 befestigt, der an den Seitenwänden 56 des oberen Rahmens 50 bzw. an den Teilern 58 durch Befestigungsbolzen 70 angeordnet ist. Die äußere Kante 66 ist mit Gewichten 72 ausgestattet, um die Klappwirkung der Platten 62 zu erhöhen. In der dargestellten Ausführungsform umfassen die Gewichte 72 mit den Platten 62 verschraubte Befestigungsschrauben, obwohl andere Gewichtsgestaltungen verwendet werden könnten. Die Platten 62 erstrecken sich von den Seitenwänden 56 bzw. den Teilern 58 in eine stromab gerichtete Richtung nach außen. In Ruhe bilden die sich stromab erstreckenden Platten 62 einen spitzen Winkel mit den Seitenwänden 56 bzw. den Teilern 58 zwischen 30° und 60°. Die Befestigungskanäle 68 definieren denselben spitzen Winkel.

Die flexible und federnde Platte wird durch ein Gummiriemenmaterial gebildet, das sich PVC 100 nennt und von der Fa. Alert Manufacturing (US) vertrieben wird.

## Patentansprüche

1. Verteiler (60) zur Verbesserung der Materialverteilung auf einem Sieb (46) eines Reinigungssystems (26), der eine bewegliche Platte (62) umfasst, welche eine innere Kante (64) mit einem Befestigungszusammenbau und eine äußere Kante (66) aufweist und geeignet ist, bei einer Bewegung des Siebs (46) eine Klappbewegung zu vollführen, **dadurch gekennzeichnet, dass** die Platte (62) flexibel und federnd ist und dass an der äußeren Kante (66) ein Gewicht (72) angebracht ist.

2. Verteiler (60) Anspruch 1, **dadurch gekennzeichnet, dass** die Platte (62) in Ruhestellung mit der Flussrichtung des Ernteguts auf dem Sieb (46) einen spitzen, stromab gerichteten Winkel einschließt.

3. Verteiler (60) nach Anspruch 2, **dadurch gekennzeichnet, dass** der Winkel zwischen 30 und 60° liegt.

4. Siebkasten (40) für einen landwirtschaftlichen Mähdrescher (10), mit einem Rahmen (50), an dem ein Sieb (46) abgestützt ist, in dem ein langgestreckter Flussweg für zu reinigendes Korn definiert ist, **dadurch gekennzeichnet, dass** das Sieb (46) mit einem Verteiler (60) nach einem der vorhergehenden Ansprüche ausgestattet ist.

5. Siebkasten (40) nach Anspruch 4, **dadurch gekennzeichnet, dass** der Rahmen (50) Seitenwände (56) umfasst, und dass mehrere Verteiler (60) an den Seitenwänden (56) befestigt sind und sich von dort in den langgestreckten Flussweg des Korns erstrecken und während einer Bewegung des Rahmens (50) nach vorn und hinten klappen.

6. Siebkasten (40) nach Anspruch 4 oder 5, **dadurch gekennzeichnet, dass** das Sieb (46) mit sich längs erstreckenden Teilern (58) versehen ist, die einen langgestreckten Flussweg für zu reinigendes Korn definieren, und dass mehrere Verteiler (60) an den Teilern (58) befestigt sind und sich von dort in den langgestreckten Flussweg des Korns erstrecken und während einer Bewegung des Rahmens (50) nach vorn und hinten klappen.

7. Mähdrescher (10) mit einem Siebkasten (40) nach einem der Ansprüche 4 bis 6.

## Claims

1. A spreader (60) for improving the material distribution upon a sieve (46) of a cleaning system (26), **characterized in that** the spreader (60) comprises a movable panel (62) suited to fulfill a flap motion during movement of the sieve (46).

2. A spreader (60) according to claim 1, **characterized in that** the panel (60) comprises an inner edge (64) and an outer edge (66), and that the inner edge (64) is provided with a mounting assembly and the outer edge (66) is provided with a weight (72).

3. A spreader (60) according to claim 2, **characterized in that** the panel (62) is flexible and resilient.

4. A spreader (60) according to one of claims 1 to 3, **characterized in that** the panel (62) encloses an acute downstream angle with the flow direction on the sieve (46) when at rest.

5. A spreader (60) according to claim 4, **characterized in that** the angel lies between 30 and 60°.

6. A cleaning shoe (40) for an agricultural combine (10) comprising a frame (50) on which a sieve (46) is supported in which a longitudinal flow path for grain to be cleaned is defined, **characterized in that** the sieve (46) is provided with a spreader (60) according to one of the preceding claims.

7. A cleaning shoe (40) according to claim 6, **characterized in that** the frame (50) comprises side walls (56), and that a plurality of spreaders (60) are mounted to the side walls (56) and extend therefrom into the longitudinal flow path and flap forwardly and rearwardly during a movement of the frame (50).

8. A cleaning shoe (40) according to claim 6 or 7, **characterized in that** the sieve (46) is provided with longitudinally extending dividers (58) defining a longitudinal low path for grain to be cleaned, and that a plurality of spreaders (60) are mounted to the dividers (58) and extend therefrom into the longitudinal flow path and flap forwardly and rearwardly during a movement of the frame (50).

9. A combine (10) having a cleaning shoe (40) according to one of claims 6 to 8.

## Revendications

1. Répartiteur (60) destiné à améliorer la répartition de matière sur un tamis (46) d'un système de nettoyage (26), qui présente une plaque mobile (62) qui elle-même présente un bord intérieur (64) doté d'un ensemble de fixation et un bord extérieur (66) et qui convient, lorsque le tamis (46) est déplacé, pour exécuter un déplacement de basculement, **caractérisé en ce que** la plaque (62) est flexible et élastique et **en ce qu'**un poids (72) est installé sur son bord extérieur (66).

2. Répartiteur (60) selon la revendication 1, **caractérisé en ce qu'**en position de repos, la plaque (62) forme avec la direction d'écoulement de la récolte sur le tamis (46) un angle aigu orienté vers l'aval.

3. Répartiteur (60) selon la revendication 2, **caractérisé en ce que** l'angle est compris entre 30 et 60°.

4. Caisson de tamisage (40) pour une moissonneuse-batteuse agricole (10), doté d'un bâti (50) sur lequel s'appuie un tamis (46) dans lequel est défini un parcours allongé d'écoulement du grain à nettoyer, **caractérisé en ce que** le tamis (46) est doté d'un répartiteur (60) selon l'une des revendications précédentes.

5. Caisson de tamisage (40) selon la revendication 4, **caractérisé en ce que** le bâti (50) présente des parois latérales (56) et **en ce que** plusieurs répartiteurs (60) sont fixés sur les parois latérales (56) et de là s'étendent dans le parcours allongé d'écoulement du grain et basculent vers l'avant et vers l'arrière pendant un déplacement du bâti (50).

6. Caisson de tamisage (40) selon les revendications 4 ou 5, **caractérisé en ce que** le tamis (46) est doté de diviseurs (58) qui s'étendent dans le sens de sa longueur et qui définissent un parcours allongé d'écoulement du grain à nettoyer et **en ce que** plusieurs répartiteurs (60) sont fixés sur les diviseurs (58) et de là s'étendent dans le parcours allongé d'écoulement du grain et basculent vers l'avant et vers l'arrière pendant un déplacement du bâti (50).

7. Moissonneuse (10) dotée d'un caisson de tamisage (40) selon l'une des revendications 4 à 6.
